Europäisches Patentamt

**European Patent Office**

**Office européen des brevets**

(19)

(11) Veröffentlichungsnummer: **0 195 919**
**A2**

(12)
# EUROPÄISCHE PATENTANMELDUNG

(21) Anmeldenummer: 86101908.1

(22) Anmeldetag: **14.02.86**

(51) Int. Cl.⁴: **A 23 B 4/06,** A 23 L 3/36,
A 23 P 1/00, B 02 C 18/00

(30) Priorität: **25.02.85 DE 3506535**

(43) Veröffentlichungstag der Anmeldung: **01.10.86**
**Patentblatt 86/40**

(84) Benannte Vertragsstaaten: **AT BE CH DE FR LI NL**

(71) Anmelder: **Linde Aktiengesellschaft,**
**Abraham-Lincoln-Strasse 21, D-6200 Wiesbaden (DE)**

(72) Erfinder: **Schmidt, Edwin P., Steingasse 25,**
**D-3563 Dautphetal 3 (DE)**

(74) Vertreter: **Schaefer, Gerhard, Dr., Linde**
**Aktiengesellschaft Zentrale Patentabteilung,**
**D-8023 Höllriegelskreuth (DE)**

(54) **Verfahren und Vorrichtung zur Verarbeitung und Konservierung von Gewebeteilen.**

(57) Die Erfindung betrifft ein Verfahren zum Schockgefrieren von organischen Gewebsteilen mittels eines tiefgekühlten Gases. Es wird vorgeschlagen, daß ein tiefgekühltes Gas während eines Misch- und/oder Zerkleinerungsprozeßes der organischen Gewebsteile durch eine Injektion direkt in die Masse der organischen Gewebsteile eingebracht und innerhalb der Gewebsteile versprüht wird.

**Verfahren und Vorrichtung zur
Verarbeitung und Konservierung
von Gewebeteilen**

Die Erfindung betrifft ein Verfahren und eine Vorrichtung
zur Konservierung von tierischen oder pflanzlichen Gewebeteilen unter Erhaltung der Lebensfrische durch Zerkleinern
und Gefrieren.

Es ist bekannt, die Lebensfrische von tierischen und pflanzlichen Gewebeteilen durch Schockgefrieren und Tiefkühlkonservieren zu erhalten. Um dieses Ziel zu erreichen ist es
erforderlich, die konservierenden Maßnahmen bei Tieren
unmittelbar post mortem und bei Pflanzen unmittelbar nach
der Ernte durchzuführen. Bei tierischem Gewebe bleibt
auf diese Weise der sogenannte Warmfleischcharakter und
der damit verbundene Frischegeschmack erhalten.

Es ist weiterhin bekannt, daß ein großer Teil der in der
Lebensmittelindustrie verarbeiteten tierischen und pflanzlichen Gewebeteile nicht in ihrer ursprünglichen Form,
sondern erst in einem weiteren Verarbeitungsstadium konserviert wird. Beispiele hierfür sind das Zerkleinern
von Fleischteilen zu Wurstbrät oder von Kakaofrüchten
zu einer Grundmasse für die Schokoladenherstellung. Bei
derartigen Verfahren werden die Gewebeteile zunächst zerkleinert, gemischt und portioniert und erst nach diesen vorbereitenden Arbeitsgängen schockgefroren (DE-OS 34 11 945

Es hat sich gezeigt, daß die bekannten Verfahrensweisen zum Konservieren der Lebensfrische von Gewebeteilen in einzelnen nacheinander ablaufenden Schritten nicht immer zum erwünschten Erfolg führen. Je nach Art der Gewebeteile und des angewandten Verfahrens ergaben sich bisher häufig Endprodukte, deren Qualität aufgrund einer zu langen dauernden und störanfälligen Verarbeitung gefährdet war oder deren Endzustand bezüglich der Homogenität des Produkts nicht einen gleichmäßigen Standard garantierte.

Der Erfindung liegt deshalb die Aufgabe zugrunde, ein Verfahren der eingangs geschilderten Art zu entwickeln, das die Erhaltung der Lebensfrische der zu verarbeitenden Gewebeteile sicherstellt und gleichzeitig ein homogenes Endprodukt gewährleistet.

Diese Aufgabe wird dadurch gelöst, daß die Gewebeteile in einem einzigen Arbeitsvorgang gleichzeitig zerkleinert, mittels eines tiefkalten verflüssigten Gases schockgefroren und granuliert werden, wobei das tiefkalte verflüssigte Gas mittels eines Injektors direkt in die Masse der Gewebeteile eingebracht wird.

Das erfindungsgemäße Verfahren führt zu einem granulierten rieselfähigen Endprodukt, das beliebig portioniert und in tiefkaltem Zustand der Weiterverarbeitung zugeführt oder beliebig gelagert werden kann. Durch das Einbringen eines tiefkalten verflüssigten Gases, beispeilsweise von flüssigem Stickstoff, direkt in die Masse der Gewebeteile ohne nennenswerten Verdampfungsverlust unter gleichzeitigem Zerkleinern und Mischen der Gewebeteile wird der Kälteinhalt des Kühlmittels optimal genutzt und damit eine sehr kurze Bearbeitungszeit erreicht. Auf diese Weise entsteht ein optimaler Schockgefriereffekt, der die hohe Qualität des Endprodukts sicherstellt.

Im Gegensatz zu bekannten Verfahren, bei denen zwar häufig während des Zerkleinerns der Gewebeteile ebenfalls mit tiefkalten verflüssigten Gasen gekühlt, jedoch nicht gefroren wird, werden beim erfindungsgemäßen Verfahren alle bei den bekannten Verfahren nacheinander ablaufenden Verfahrensschritte gleichzeitig durchgeführt. Überraschenderweise wird durch diesen Grundgedanken nicht nur eine erhebliche Verkürzung der Bearbeitungszeit und damit eine verbesserte Sicherung der Frischequalität erreicht, sondern auch ein Endprodukt erzielt, das bezüglich Homogenität und Form alle Voraussetzungen für die optimale Weiterverarbeitung bietet. Dieser vorteilhafte Zustand des Endprodukts ist in seiner rieselfähigen Granulatform zu sehen, die zumindest bei tierischen Gewebeteilen ein überraschendes Ergebnis der erfindungsgemäßen Verfahrensweise darstellt.

Das erfindungsgemäße Verfahren wird mit besonderem Vorteil so ausgeführt, daß die Masse der Gewebeteile während des gleichzeitigen Zerkleinerns, Schockgefrierens und Granulierens in Rotation versetzt wird und die Gewebeteile abwechselnd an einer Zerkleinerungs- und/oder Mischvorrichtung und an einem in die Gewebeteile eintauchenden Injektor für das tiefkalte verflüssigte Gas vorbeigeführt werden. Die Gewebeteile führen hierbei einerseits durch Mitführung bei der Rotation des Behälters Kreisbewegungen in horizontalen Ebenen und andererseits durch die Einwirkung der Zerkleinerungs- und /oder Mischvorrichtung Kreisbewegungen in vertikalen Ebenen durch. Diese kombinierten Bewegungen bewirken ein besonders schnelles Durchmischen und Abkühlen der Masse der Gewebeteile.

Bei einer besonders vorteilhaften Variante des erfindungsgemäßen Verfahrens werden die Gewebeteile vor den gleichzeitig ablaufenden Arbeitsvorgängen Zerkleinern, Schockgefrieren und Granulieren einem Unterdruck ausgesetzt und die gleichzeitig ablaufenden Arbeitsvorgänge unter Überdruck durchgeführt. Durch diesen Vakuumeffekt werden die Poren des Gewebes soweit geöffnet, daß das unter Überdruck eingebrachte tiefkalte verflüssigte Gas leicht in das Gewebe eindringen kann und einen besonders großen Schockgefriereffekt bewirkt. Bei bestimmten Gewebearten ist dieser Schockgefriereffekt so groß, daß die Zerkleinerung allein durchdie Bewegung der Masse der Gewebeteile bewirkt wird und somit eine gesonderte Zerkleinerungsvorrichtung nicht mehr erforderlich ist.

Das mit dem erfindungsgemäßen Verfahren erzeugte Granulat eignet sich auch besonders gut zur Versendung über größere Entfernungen. In diesem Fall schließt sich erfindungsgemäß an die gleichzeitig ablaufenden Arbeitsvorgänge Zerkleinern, Schockgefrieren und Granulieren als weiterer Arbeitsvorgang eine Gefriertrocknung an.

Eine Vorrichtung zur Durchführung des erfindungsgemäßen Verfahrens besteht im wesentlichen aus einem Behälter zur Aufnahme der Gewebeteile, aus mindestens einer Zerkleinerungs- und/oder Mischvorrichtung sowie aus mindestens einem Injektor, der mit einem Vorratstank für tiefkaltes verflüssigtes Gas in Verbindung steht und der so angeordnet ist, daß bei gefülltem Behälter mindestens ein Teil seiner Austrittsöffnungen in die Masse der Gewebeteile hineinragt. Eine solche Vorrichtung eignet sich besonders zur Durchführung des erfindungsgemäßen Verfahrens, wenn der Behälter um seine senkrechte Mittelachse drehbar ausgebildet ist.

Je nach Gewebeart und Arbeitsbedingungen sind verschie-

dene Ausführungsformen für den Injektor besonders vorteilhaft. Beispielsweise kann der Injektor als ein an seinem Ende annähernd rechtwinkling umgebogenes Rohr ausgebildet und mit Abstand zur Drehachse des Behälters so angeordnet sein, daß die Austrittsöffnung des Rohres in die Richtung der Drehbewegung des Behälters weist. Bei einer anderen Ausführungsform einer erfindungsgemäßen Vorrichtung ist der Injektor als kegelförmiger, nach unten sich erweiternder und offener Hohlkörper mit einer im Bereich der Spitzen des Hohlkörpers angeordneten Düse ausgebildet. Der Injektor kann auch mit Vorteil als mit seitlichen Öffnungen versehenes Rohr ausgebildet und mit Abstand zur Drehachse des Behälters in einem bis zur Oberfläche der Masse der Gewebeteile reichenden Führungsrohr verschiebbar angeordnet sein, wobei am Ende des Führungsrohres eine die Masse der Gewebeteile mindestens teilweise abdeckende Abdeckplatte befestigt ist.

Bei allen Ausführungsformen kann der Injektor mindestens teilweise wärmeisoliert sein. Die Wärmeisolierung kann dabei entweder durch Aufbringen eines wärmeisolierenden Materials oder durch doppelwandige, einen, vorzugsweise evakuierten, Zwischenraum belassende Ausführung erreicht werden. Der Vorteil der Wärmeisolierung besteht darin, daß ein Festfrieren von Gewebeteilen am Injektor verhindert wird.

Bei einer Vorrichtung zur Durchführung der erfindungsgemäßen Verfahrensvariante mit Druckwechsel im Innern des Behälters, ist der Behälter zur Aufnahme der Gewebeteile druckfest ausgebildet und gasdicht verschließbar.

Das erfindungsgemäße Verfahren und die erfindungsgemäßen Vorrichtungen können auf allen Gebieten, bei denen die Lebensfrische von Gewebeteilen konserviert werden soll, mit Erfolg eingesetzt werden. Ein bevorzugtes Anwendungsbeispiel ist die Erhaltung des Warmfleischcharakters
bei schlachtfrischem Fleisch, die durch die Anwendung des
erfindungsgemäßen Verfahrens sicherer als bisher gewährleistet wird.

Ein weiteres Anwendungsbeispiel ist die Konservierung
von Frischzellenpräparaten für die Frischzellentherapie,
bei der lebensfrische tierische Zellaufschwemmungen zum
Einsatz kommen. Da diese Zellaufschwemmungen nur grammweise verabreicht werden können, mußten bisher größere Verluste der benötigten tierischen Organze hingenommen werden.
Mit dem erfindungsgemäßen Verfahren dagegen können die Organteile in kürzester Zeit aufgearbeitet und für eine längere Tiefkühllagerung präpariert werden.

Ein vorteilhaftes Anwendungsbeispiel für die Verarbeitung
pflanzlichen Gewebes ist die Herstellung von Schokoladengrundmassen.

Die erfindungsgemäßen Vorrichtungen eignen sich im übrigen
auch hervorragend für die Herstellung von Brüh- und Rohwurst im Kutter, wobei das Einleiten von tiefkaltem verflüssigtem Gas durch einen Injektor in die Fleisch- oder
Brätmasse die erforderliche schnelle Kühlung bewirkt.

Weitere Einzelheiten des erfindungsgemäßen Verfahrens
und der erfindungsgemäßen Vorrichtungen werden nachfolgend
anhand der in den Figuren schematisch dargestellten Ausführungsbeispiele erläutert.

Es zeigen:

Figur 1    ein Ausführungsbeispiel einer erfindungsgemäßen
           Vorrichtung zur Durchführung des erfindungsgemäßen Verfahrens;

Figur 2    ein weiteres Ausführungsbeispiel einer erfindungsgemäßen Vorrichtung zur Durchführung des
           erfindungsgemäßen Verfahrens;

Figur 3    einen Injektor zur Durchführung des erfindungsgemäßen Verfahrens;

Figur 4    einen weiteren Injektor zur Durchführung des
           erfindungsgemäßen Verfahrens.

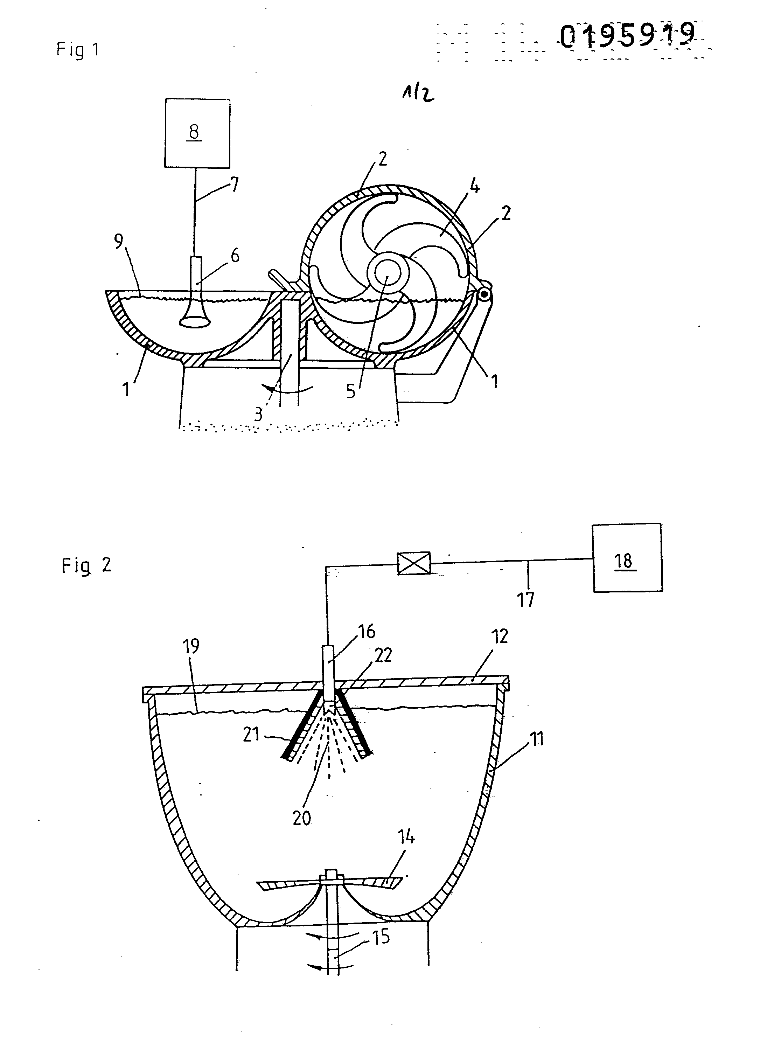

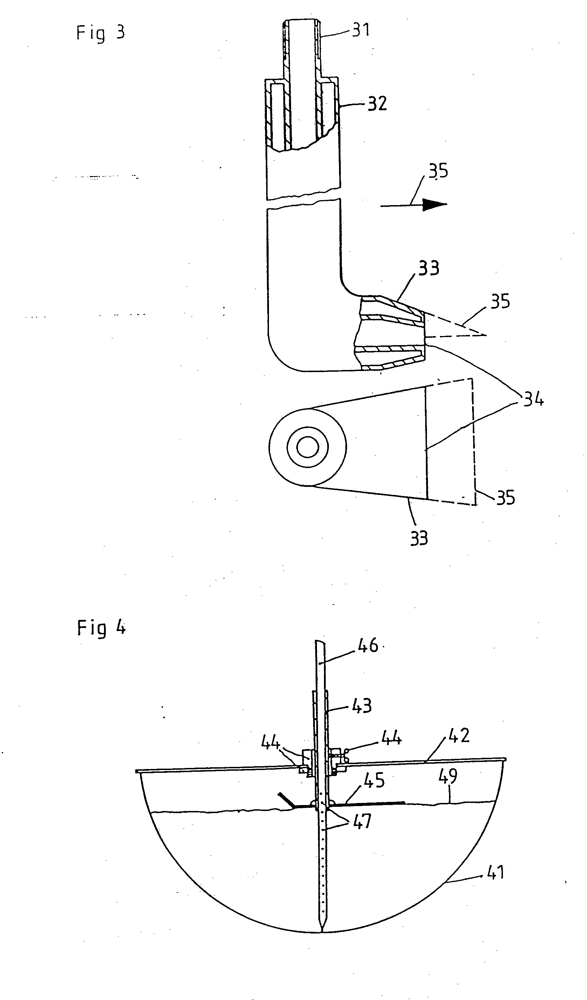

In Figur 1 ist ein bei der Fleischverarbeitung häufig
verwendeter sogenannter Kutter dargestellt, der einen
ringförmigen Behälter 1 mit aufklappbarem Deckel 2 besitzt.
Der Behälter 1 ist um eine senkrechte Auchse 3 drehbar
und kann von einem nicht dargestellten Motor angetrieben
werden. An einer beliebigen Stelle des Behälters 1 ist
ein drehbarer Messersatz 4 angeordnet, dessen horizontale
Achse 5 oberhalb des Randes des Behälters 1 liegt. An
einer anderen Stelle des Behälters 1 ist erfindungsgemäß
ein in die Fleischmasse hineinragender Injektor 6 angeordnet, der über eine Leitung 7 mit einem Tank 8 für flüssigen Stickstoff verbunden ist. Einzelheiten des hier nur
schematisch angedeuteten Injektors 6 sind z.B. aus der
Figur 3 zu entnehmen.

Beim Betrieb des in Figur 1 dargestellten Kutters werden
schlachtfrische Fleischteile bis zur Füllhöhe 9 in den
Behälter 1 eingefüllt, der Behälter 1 um die Achse 3 und
der Messersatz 4 um die Achse 5 in Rotation versetzt und
flüssiger Stickstoff über den Injektor 6 direkt in die
Fleischmasse eingeleitet. Nach einem Zeitraum von 1 bis
5 Minuten entsteht aus der inhomogenen Fleischmasse ein
homogenes, schockgefrorenes und rieselfähiges Granulat,
das dem Behälter 1 entnommen und einer Tiefkühllagerung
zugeführt werdenkann.

Die hervorragende Qualität des Produkts, in dem der Warmfleischcharakter des Fleisches voll erhalten bleibt, wird dadurch erreicht, daß die Zerkleinerung durch den Messersatz 4, das Schockgefrieren durch den in die Fleischmasse eingetauchten Injektor 6 und das Granulieren durch die kombinierte Mischwirkung des Messersatzes 4 und der Rotation des Behälters 1 gleichzeitig in einem einzigen Arbeitsgang erfolgen. Die Fleischmasse erhält hierbei durch den rotierenden Messersatz 4 eine Rotationsbewegung in vertikalen Ebenen und durch die Mitführung in dem rotierenden Behälter 1 eine Rotationsbewegung in horizontalen Ebenen.

In Figur 2 ist ein bei der Fleischverarbeitung ebenfalls häufig verwendeter sogenannter Schnellkutter dargestellt. Dieser Schnellkutter besitzt einen feststehenden Behälter 11, der mit einem abnehmbaren Deckel 12 abgedeckt werden kann. Im Bodenbereich des Behälters sind Flügelmesser 14 angebracht, die um eine Achse 15 in Rotation versetzt werden können. Im Deckel 12 des Behälters 11 ist ein Injektor 16 befestigt, der über eine Leitung 17 mit einem Tank 18 für flüssigen Stickstoff in Verbindung steht. Der Injektor 16, der in die Fleischmasse bis unter deren Füllhöhe 19 hineinragt, ist als kegelförmiger nach unten sich erweiternder offener Hohlkörper 20 ausgebildet und besitzt auf seiner äußeren Oberfläche eine Wärmeisolierung 21, die ein Anfrieren von Fleischmasse verhindert. An der inneren Spitze des Hohlkörpers 20 ist eine Sprühdüse 22 angeordnet, durch die der flüssige Stickstoff in kleine Tröpfchen versprüht wird.

Der in Figur 2 dargestellte Schnellkutter weist die gleichen Eigenschaften auf und führt zu dem gleichen Endprodukt hoher Qualität wie der in Figur 1 dargestellte Kutter. Durch die spezielle Form der Flügelmesser 14 erhält die Fleischmasse bei dieser Ausführungsform des Kutters durch die Rotation der Flügelmesser 14 gleichzeitig eine Rotationsbewegung in senkrechter und horizontaler Ebene.

Der Schnellkutter der Figur 2 ist darüber hinaus auch für eine Variante des erfindungsgemäßen Verfahrens geeignet, bei der die Fleischmasse vor den gleichzeitig ablaufenden Arbeitsvorgängen Zerkleinern, Schockgefrieren und Granulieren einem Unterdruck ausgesetzt wird. Hierbei wird der Behälter 11 durch Abdichten des Deckels 12 und der Durchführung des Injektors 16 druckfest ausgebildet. Er kann dann mit Hilfe einer Vakuumpumpe evakuiert werden. Dieser Vakuumeffekt bewirkt eine Öffnung des Zellgewebes, durch die die folgenden Arbeitsgänge eine noch höhere Wirksamkeit erhalten, insbesondere dann, wenn der flüssige Stickstoff unter Überdruck in den Kutter eingebracht wird.

In Figur 3 ist ein Injektor dargestellt, wie er beispielsweise bei der erfindungsgemäßen Vorrichtung der Figur 1 verwendet werden kann. Der Injektor ist als doppelwandiges Rohr ausgebildet, d.h. ein inneres, tiefkaltes verflüssigtes Gas führendes Rohr 31 ist konzentrisch von einem zweiten Rohr 32 mit Abstand umgeben. Der Zwischenraum zwischen den Rohren 31 und 32 kann evakuiert werden. Hierdruch ergibt sich eine wärmeisolierende Wirkung, die ein Festfrieren von Gewebeteilen an der Außenseite des Injektors verhindert.

Der Injektor ist an seinem unteren Ende 33 etwa rechtwinklig umgebogen, so daß seine Düsenöffnung 34 in eine horizontale Richtung weist. Der Injektor wird in einem Kutter so angeordnet, daß die Düsenöffnung 34 in die gleiche Richtung wie die durch den Pfeil 35 angedeutete Fortbewegung der Masse der Gewebeteile weist. Hierdurch wird ein Verstopfen der Düsenöffnung 34 verhindert.

Wie in der Draufsicht der Figur 3 angedeutet, kann die Düsenöffnung mit Vorteil leicht zusammengedrückt sein und damit eim Querschnitt eine ovale Form aufweisen. Ein weiterer Vorteil kann sich ergeben, wenn der obere Teil der Düsenöffnung gegenüber dem unteren Teil verlängert ist und somit über diesen übersteht. Diese Variante ist in Figur 3 gestrichelt bei 35 angedeutet.

Die Figur 4 zeigt eine weitere erfindungsgemäße Variante eines Injektors zur Anwendung bei Kuttern. Bei dieser Ausführung ist der Injektor 46 in der Abdeckung 42 der Kutterschüssel 41 über ein vorzugsweise wärmeisoliertes Führungsrohr 43 befestigt. Zur Befestigung und Justierung des Führungsrohres dienen Verschraubungs- und Feststellelemente 44. Am Führungsrohr 43 ist außerdem eine Abdeckplatte 45 so befestigt, daß sie in der Ebene der Füllhöhe 49 der Fleischmasse liegt. Der bis zum Boden der Kutterschüssel 41 reichende Injektor besitzt lochförmige Düsen 47, vorzugsweise mit einem Durchmesser von etwa 1,5 mm, die oberhalb der Füllhöhe 49 durch das Führungsrohr 43 abgedeckt sind.

## Patentansprüche

1. Verfahren zur Verarbeitung und Konservierung von tierischen oder pflanzlichen Gewebeteilen unter Erhaltung der Lebensfrische durch Zerkleinern und Gefrieren, dadurch gekennzeichnet, daß die Gewebeteile in einem einzigen Arbeitsvorgang gleichzeitig zerkleinert, mittels eines tiefkalten verflüssigten Gases schockgefroren und granuliert werden, wobei das tiefkalte verflüssigte Gas mittels eines Injektors direkt in die Masse der Gewebeteile eingebracht wird.

2. Verfahren nach Anspruch 1, dadurch gekennzeichnet, daß die Masse der Gewebeteile während des gleichzeitigen Zerkleinerns, Schockgefrierens und Granulierens in Rotation versetzt wird und die Gewebeteile abwechselnd an einer Zerkleinerungs- und/oder Mischvorrichtung und an einem in die Gewebeteile eintauchenden Injektor für das tiefkalte verflüssigte Gas vorbeigeführt werden.

3. Verfahren nach Anspruch 1 oder 2, dadurch gekennzeichnet, daß die Gewebeteile vor den gleichzeitig ablaufenden Arbeitsvorgängen Zerkleinern, Schockgefrieren und Granulieren einem Unterdruck ausgesetzt und die gleichzeitig ablaufenden Arbeitsvorgänge unter Überdruck durchgeführt werden.

4. Verfahren nach einem der Ansprüche 1 bis 3, dadurch gekennzeichnet, daß die Gewebsteile nach den gleichzeitig ablaufenden Arbeitsvorgängen Zerkleinern, Schockgefrieren und Granulieren in einem weiteren Arbeitsvorgang gefriergetrocknet werden.

5. Vorrichtung zur Durchführung des Verfahrens nach einem der Ansprüche 1 bis 4, gekennzeichnet durch einen Behälter (1,11) zur Aufnahme der Gewebeteile, durch mindestens eine Zerkleinerungs- und/oder Mischvorrichtung (4,14) sowie durch mindestens einen Injektor (6,16) der mit einem Vorratstank (8,18) für tiefkaltes verflüssigtes Gas in Verbindung steht und der so angeordnet ist, daß bei gefülltem Behälter (1,11) mindestens ein Teil seiner Austrittsöffnungen in die Masse der Gewebeteile hineinragt.

6. Vorrichtung nach Anspruch 5, dadurch gekennzeichnet, daß der Behälter (1) um seine senkrechte Mittelachse (3) drehbar ausgebildet ist.

7. Vorrichtung nach Anspruch 5 oder 6, dadurch gekennzeichnet, daß der Injektor (6) als ein an seinem Ende (33) annähernd rechtwinklig umgebogenes Rohr (31) ausgebildet und mit Abstand zur Drehachse (3) des Behälters (1) so angeordnet ist, daß die Austrittsöffnung (34) des Rohres (31) in die Richtung der Drehbewegung des Behälters weist.

8. Vorrichtung nach Anspruch 5 oder 6, dadurch gekennzeichnet, daß der Injektor (16) als kegelförmiger nach unten sich erweiternder und offener Hohlkörper (20) mit einer im Bereich der Spitze des Hohlkörpers (20) angeordneten Düse (22) ausgebildet ist.

9. Vorrichtung nach Anspruch 5 oder 6, dadurch gekennzeichnet, daß der Injektor als mit seitlichen Öffnungen (47) versehenes Rohr (46) ausgebildet und mit Abstand zur Drehachse (3) des Behälters (41) in einem bis zur Oberfläche der Masse der Gewebeteile reichenden Führungsrohr (43) verschiebbar angeordnet ist, wobei am Ende des Führungsrohres (43) eine die Masse der Gewebeteile mindestens teilweise abdeckende Abdeckplatte (45) befestigt ist.

10. Vorrichtung nach einem der Ansprüche 5 bis 9, dadurch gekennzeichnet, daß der Injektor mindestens teilweise wärmeisoliert ist.

11. Vorrichtung nach einem der Ansprüche 5 bis 10, dadurch gekennzeichnet, daß der Behälter zur Aufnahme der Gewebeteile druckfest ausgebildet und gasdicht verschließbar ist.

Fig 1

1/2

Fig 2

Fig 3

Fig 4